# EUROPÄISCHE PATENTSCHRIFT

(11) **EP 0 405 257 B1**
(45) Veröffentlichungstag und Bekanntmachung des Hinweises auf die Patenterteilung: **18.11.1993**
(21) Anmeldenummer: 90111373.8
(22) Anmeldetag: 16.06.1990
(51) Int. Cl.: C04B 35/44, C04B 35/10, F27D 5/00, H01M 10/39, C04B 35/64

(54) **Verfahren zur Herstellung einer Sintervorrichtung**
Process for the production of a sintering device
Procédé de production d'appareil de frittage

(30) Priorität: 24.06.1989 DE 3920851
(43) Veröffentlichungstag der Anmeldung: 02.01.1991
(73) Patentinhaber: Asea Brown Boveri Aktiengesellschaft, 68309 Mannheim (DE)
(72) Erfinder: Haar, Wilhelm, Dr., D-6902 Sandhausen (DE); Weber, Guido, D-6836 Offertsheim (DE); Lechner, Alois, D-6928 Helmstadt-Bargen (DE)
(74) Vertreter: Rupprecht, Klaus, Dipl.-Ing.

(56) Entgegenhaltungen:
- EP-A- 10 834
- GB-A- 2 058 039
- CHEMICAL ABSTRACTS, vol. 100, no. 2, Januar 1984 Columbus, Ohio, USA NGK Spark Plug Co. Ltd:: "Firing of Beta-Alumina Porcelain" Seite 305; linke Spalte; ref. no. 11686N
- CHEMICAL ABSTRACTS, vol. 109, no. 22, 1988 Columbus, Ohio, USA T.Harato et al.: "Manufacture of Easily & EP-A-281265 ref. no. 195956R
- CHEMICAL ABSTRACTS, vol. 90, no. 22, 1978 Columbus, Ohio, USA G.May et al.: "Improvements in or Relating to & GB-A-1531167 ref. no. 173502B
- CHEMICAL ABSTRACTS, vol. 97, no. 16, Oktober 1982 Columbus, Ohio, USA & JP-A-8267023 Seite 313; rechte Spalte; ref. no. 132357J
- CHEMICAL ABSTRACTS, vol. 98, no. 12, 1983 Columbus, Ohio, USA A.Reckziegel et al.: "Firing Aid for Beta-Alumina Preparation" Seite 292; linke Spalte; ref. no. 94358W

## Beschreibung

Die Erfindung bezieht sich auf ein Verfahren zur Herstellung einer Sintervorrichtung gemäß Patentanspruch 1.

Solche Sintervorrichtungen kommen bevorzugt bei der Herstellung von Formkörpern zur Anwendung. Ein besonderes Anwendungsgebiet solcher Sintervorrichtungen ist die Fertigung von ionenleitenden Festelektrolyten, die in Natrium/Schwefel-Speicherzellen eingesetzt werden. Solche ionenleitenden Festelektrolyte werden aus Betaaluminiumoxid durch Sintern hergestellt. Die meisten heute zum Einsatz kommenden Natrium/Schwefel-Speicherzellen sind becherförmig ausgebildet. Der zur Trennung von Anoden- und Kathodenraum der Speicherzelle verwendete Festelektrolyt ist ebenfalls becherförmig ausgebildet. Sein Innenbereich wird als Reaktandenraum genutzt. Der Festelektrolyt muß zur Erfüllung seiner Aufgaben eine hohe Ionenleitfähigkeit, eine hohe Dichte und eine hohe Festigkeit aufweisen. Deswegen muß für seine Herstellung besondere Sorgfalt aufgewendet werden. Für die Fertigung der Festelektrolyte wird natriumionenleitendes Betaaluminiumoxid verwendet, das in erster Linie zu 80 bis 95 % aus Aluminiumoxid und zu 5 bis 12 % aus Natriumoxid besteht. In der oxidkeramischen Technologie ist es üblich, die Anteile der Zusammensetzung massenmäßig auf die Oxide der vorliegenden Metalle zu beziehen. Aus dieser Zusammensetzungsangabe ist bereits zu ersehen, daß Betaaluminiumoxid keine Strukturmodifikation der chemischen Verbindung Aluminiumoxid ist, wie dies etwa bei Alphaaluminumoxid der Fall ist. Der irreführende Name Betaaluminiumoxid ist historisch begründet. Natriumoxid oder chemisch verwandte Verbindungen wie andere Alkalimetalloxide, Erdalkalimetalloxide, Silberoxid, Wasser oder andere Wasserstoff enthaltende Verbindungen sind wesentlicher Bestandteil dieses keramischen Basismaterials. Es gibt mindestens vier verschiedene Betaaluminiumoxidstrukturen, und war Beta'-, Beta''-Beta'''-, und Beta''''-Al₂O₃, die als gemeinsames Merkmal den Aufbau aus mehreren aufeinanderfolgenden, dicht gepackten Sauerstofflagen aufweisen, die blockweise von zweidimensional ausgedehnten parallelen Schichten mit reduziertem Sauerstoffgehalt getrennt werden. Diese Zwischenschichten enthalten neben den Sauerstoffionen die beweglichen, für den Einsatz von Betaaluminiumoxid als Festelektrolyt wesentlichen Ionen. Von den o.g. Phasen werden die Beta- und die Beta''-Alphaalumiumoxidphase bevorzugt.

Um die hohe Ionenleitfähigkeit des Festelektrolyten und die übrigen oben aufgeführten Eigenschaften bei der Fertigung des Festelektrolyten zu erzielen, muß der Werkstoff sehr homogen sein. Bei der Herstellung von Festelektroylten kommt es jedoch bis heute immer noch durch äußere Einflüsse in Form von chemischen Reaktionen, z.B. mit den für die Herstellung verwendeten Hilfsmitteln, zur Ausbildung von Inhomogenitäten in der Keramik. Außerdem kommt es bei der Sinterung der Keramik ohne geeignete Schutzhülle zu einer Abdampfung und damit zu einer Zerstörung der gleichmäßigen Verteilung des Natriums innerhalb des Festelektrolytmaterials. Dies führt zu inneren Spannungen und damit zu Deformationen des Festelektrolytrohres. Bisher war es üblich, den aus dem Keramikmaterial gefertigten Festelektrolytrohling vor dem Sintern in grobkörniges Pulver aus Natriumbetaaluminoxid einzubetten. Dieses Verfahren ist sehr kompliziert in seiner Handhabung, da das Einbetten des Festelektrolytrohlings in das grobkörnige Pulver sehr aufwendig und zeitraubend ist. Einen zusätzlichen Aufwand erfordert die Herstellung des grobkörnigen Pulvers und die Fertigung eines gegen Natriumdampf stabilen Gefäßes.

Aus der CHEMICAL ABSTRACTS, vol. 100, no. 2, Jan. 1984, Seite 305, ref. no. 11687p ist eine Vorrichtung zum Brennen von Betaaluminiumporzellan bekannt. Die Vorrichtung wird durch einen Hohlkörper gebildet, für dessen Herstellung ein magnesium- und aluminumhaltiges Material verwendet wird, das gegebenenfalls unter Beimischung eines Binders bei 1700° C gesintert wird.

Aus der EP-A-281265 (im Recherchenbericht als: CHEMICAL ABSTRACTS, vol. 109, no. 22, 1988, ref. no. 195965r) ist ein Verfahren zur Herstellung eines monodispergierten Aluminiumpulvers bekannt.

In der GB-A-1531167 (im Recherchenbericht als: CHEMICAL ABSTRACTS, vol. 90, no. 22, 1978 ref. no. 173502b) ist ein Verfahren zur Herstellung eines keramischen Festelektrolyten für Natrium/Schwefel-Batterien beschrieben. Als Basismaterial dient ein Magnesium-Aluminium-Spinell und eine Lithiumverbindung. Dem verwendeten Pulver wird noch eine Natriumaluminiumverbindung und Aluminiumdioxid zugesetzt. Aus dem so gewonnenen Pulver wird ein Preßling gebildet, der anschließend zur Fertigstellung einer Wärmebehandlung unterzogen wird.

Der Erfindung liegt deshalb die Aufgabe zugrunde, ein Verfahren zur Herstellung einer preiswerten Sintervorrichtung aufzuzeigen, welche die Herstellung eines Festelektrolyten mit gleichmäßiger Natriumverteilung in dem Keramikmaterial sicherstellt.

Diese Aufgabe wird durch die Merkmale des Patentanspruches gelöst.

Erfindungsgemäß wird als Sintervorrichtung ein Hüllrohr verwendet, dessen Innenabmessungen in etwa an die gewünschten Außenmaße des zu fertigenden Formkörpers angepaßt sind. Das Hüllrohr selbst wird aus einem Werkstoff gefertigt, das Oxide von Magnesium und Aluminium aufweist.

Der verwendete Werkstoff enthält die Metalloxide in einem Molverhältnis von 1:1,04 bis 1:1,80. Für die Herstellung der Sintervorrichtung wird bevorzugt Magnesiumoxid und Alphaaluminiumoxid bzw. Magnesiumhydroxid und Alphaaluminiumoxid verwendet. Die Ausgangswerkstoffe werden zunächst zur Ausbildung eines Pulvers mit einer Korngröße kleiner 1µm gemahlen. Dieses Pulver wird anschließend bei einer Temperatur von 1250 °C calciniert. Das hierbei gewonnene Pulver zeigt bei der Phasenanalyse mittels Röntgenbeugung im wesentlichen nur noch die Linien von MgO·Al₂O₃ Spinell und schwache Linien des MgO. Im angegebenen Zusammensetzungsbereich ist das Überschuß-MgO vorwiegend im Spinellgitter gelöst ("Solid-Solution-Bereich"). Das jetzt vorliegende Pulver wird wiederum zerkleinert und anschließend mit geeigneten Dispersions-, Plastifizierungs- und Preßhilfsmitteln im Wasser aufgeschlämmt und zu einem Schlicker angerührt, der anschließend zu einem rieselfähigen Granulat, z.B. mittels Sprühtrocknung, verarbeitet wird. Dieses wird anschließend in einer isostatischen Presse zu einem Hüllrohr mit Wandstärken zwischen 2 und 4 mm verpreßt. Der Preßling wird anschließend bei einer Temperatur zwischen 1650 und 1800 °C, bevorzugt bei 1700 °C gesintert.

Die Erfindung wird nachfolgend anhand einer schematischen Zeichnung näher erläutert.

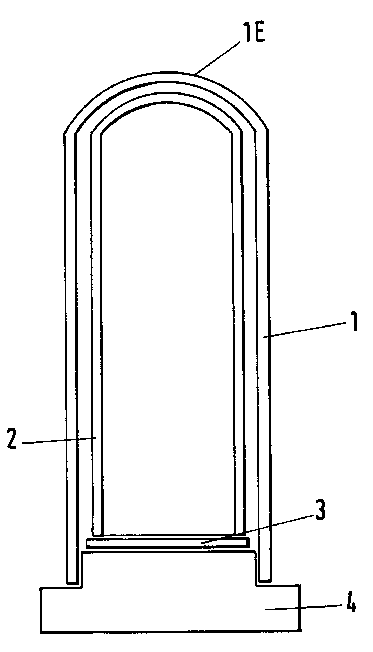

Die einzige zur Beschreibung gehörende Figur zeigt eine Sintervorrichtung 1. Sie ist als becherförmiger Hohlkörper ausgebildet, dessen Wandstärke 2 bis 4 mm beträgt. In die Sintervorrichtung 1 ist der Rohling eines Festelektrolyten 2 eingesetzt, der ebenfalls becherförmig ausgebildet ist. Die Innenabmessungen der Sintervorrichtung 1 sind so gewählt, daß zwischen den inneren Begrenzungsflächen der Sintervorrichtung und den Außenflächen des Rohlings 2 ein Abstand von 1 bis 4 mm besteht. Bei den in Natriumschwefelzellen (hier nicht dargestellt) verwendeten Festelektrolyten 2 sind die geschlossenen Enden zu einer runden Kuppe nach außen gewölbt. In entsprechender Weise ist auch das geschlossene Ende 1E der Sintervorrichtung 1 nach außen gewölbt. Das die Sintervorrichtung 1 bildende Hüllrohr ist bei dem hier dargestellten Ausführungsbeispiel aus einem magnesiumoxid- und aluminiumoxidhaltigen Werkstoff gefertigt. Erfindungsgemäß sind MgO und Al₂O₃ in einem Molverhältnis von 1:1,04 bis 1:1,80 enthalten. Der Außendurchmesser des in der Figur dargestellten Sinterkörpers 1 beträgt ca. 40 mm. Der Innendurchmesser der Sintervorrichtung 1 beträgt ca. 36 mm. Das als Sintervorrichtung dienende Hüllrohr weist in diesem Beispiel eine maximale Höhe von 320 mm auf. Zur Herstellung des Hüllrohres 1 werden Magnesiumoxid und Alphaaluminiumoxid in einem Molverhältnis von 1:1,04 bis 1:1,80 gemischt und gemahlen, so daß hieraus ein Pulver mit einer Korngröße von kleiner/gleich 1 µm gebildet wird. Die Verwendung von Magnesiumhydroxid und Alphaaluminiumoxid im gleichen Molverhältnis ist ebenfalls möglich. Das Pulver wird anschließend bei einer Temperatur von 1250 °C calciniert. Das hierbei gebildete Pulver wird wiederum in einer Mühle zerkleinert, wobei ein Pulver mit einer Korngröße von kleiner/gleich 5 µm entsteht. Dieses Pulver wird zusammen mit Dispergier-, Preßhilfs- und Bindemitteln in Wasser eingerührt. Als Dispergier-, Preßhilfs- und Bindemittel werden vorzugsweise Polycarbonsäuren, Polyglycole und Polywachse verwendet. Durch das Verrühren des Pulvers mit den Dispergier- und Preßhilfsmitteln wird ein niedrigviskoser Schlicker mit einem Feststoffgehalt zwischen 50 und 70 % gebildet. Dieser wird in einer hierfür vorgesehenen Einrichtung, z.B. einem Sprühtrockner (hier nicht dargestellt) zu einem rieselfähigen Granulat mit einer Korngröße von 0,1-250 µm verarbeitet. Das Granulat wird dann in einer isostatischen Presse zu dem in der Figur dargestellten Hüllrohr 1 mit einer Wandstärke zwischen 2 mm und 4 mm verpreßt. Hierfür wird vorzugsweise ein Druck von 200 MPa angewendet. Der so ausgebildete Preßling wird anschließend bei einer Temperatur von vorzugsweise 1700 °C gesintert. Nach dem Sintern ist das Hüllrohr 1 fertiggestellt, und kann zur Herstellung von Festelektrolyten 2, insbesondere für deren Sinterung verwendet werden. Das Raumgewicht des so hergestellten Hüllrohres 1 ist größer als 3,50 g/cm³. Es sollte vorzugsweise 3,55 g/cm³ betragen. Das Hüllrohr 1 ist hermetisch dicht. Bei einem durchgeführten Test mit Helium ergibt sich eine Heliumleckrate, die kleiner als 10⁻¹² MPa·Liter/S ist. Ein aus keramischem Beta''--Aluminiumoxid-Pulver gefertigter Rohling 2 kann jetzt in die Sintervorrichtung 1 eingesetzt. Der Rohling 2 wird dabei auf eine mitschwindende Brennunterlage 3 aus dem gleichen Material aufgesetzt, die ihrerseits auf einem Stopfen 4 aus dem Hüllrohrmaterial aufliegt.

Das zur Herstellung des Hüllrohres 1 verwendete Material kann, da es beständig gegen Einflüsse von Alkalimetallen ist, in Form von geeigneten Gefäßen auch bei der Glasherstellung zur Fertigung von Formkörpern Verwendung finden oder als Schmutzrohr für Thermoelemente in alkalihaltigen Atmosphären bei Temperaturen bis 1600 °C eingesetzt werden.

## Patentansprüche

1. Verfahren zur Herstellung einer Sintervorrichtung in Form eines Hohlkörpers, für dessen Herstellung ein magnesium- und aluminiumhaltiger Werkstoff verwendet wird, **dadurch** **ge****kennzeichnet,** daß zur Ausbildung eines als Hohlkörper dienenden Hüllrohres (1) Magnesiumoxid oder Magnesiumhydroxid und Alphaaluminiumoxid in einem Molverhältnis von 1:1,05 bis 1:1,80 homogenisiert und zu einem Pulver mit einer Korngröße von kleiner/gleich 1 µm zerkleinert werden, daß das so gewonnene Pulver anschließend bei einer Temperatur von 1250°C calciniert und daraufhin in einem Mahlaggregat zu einem Pulver mit einer Korngröße kleiner/gleich 5 µm, vorzugsweise etwa 0,5 µm zerkleinert wird, daß das so gewonnene Pulver mit Dispergier-, Plastifizierungs- und Bindemitteln in Wasser aufgeschlämmt und zu einem Schlicker angerührt und anschließend mittels Zerstäubungstrocknung zu einem rieselfähigen Granulat mit einer Korngröße zwischen 0,1 und 250 µm verarbeitet wird, und daß das Granulat in einer isostatischen Presse zu einem Hüllrohr (1) mit einer Wandstärke zwischen 2mm und 4 mm bei einem Preßdruck von etwa 200 MPa verpreßt und bei einer Temperatur größer als 1.700°C gesintert wird.

## Claims

1. Process for the production of a sintering device in the shape of a hollow body, a material containing magnesium and aluminium being used for its production, characterized in that, to form a jacket tube (1) acting as the hollow body, magnesium oxide or magnesium hydroxide and alpha-aluminium oxide are homogenized in a molar ratio of 1:1.05 to 1:1.80 and comminuted to form a powder with a particle size of less than/equal to 1 µm, in that the powder obtained in this way is then calcined at a temperature of 1250°C and then comminuted in a mill to form a powder with a particle size of less than/equal to 5 µm, preferably about 0.5 µm, in that the powder obtained in this way is suspended in water with dispersants, plasticizers and binders, stirred to form a slip and then processed by spray-drying to form pourable granules with a particle size between 0.1 and 250 µm, and in that the granules are compressed at a pressure of about 200 MPa in an isostatic press to form a jacket tube (1) with a wall thickness of between 2 mm and 4 mm, and sintered at a temperature above 1700°C.

## Revendications

1. Procédé de fabrication d'un dispositif de frittage sous la forme d'un corps creux, pour la fabrication duquel on utilise un matériau contenant du magnésium et de l'aluminium, caractérisé par le fait qu'en vue de la réalisation d'un tube enveloppe (1) servant de corps creux, on homogonéise de l'oxyde de magnésium ou de l'hydroxyde de magnésium et de l'oxyde d'aluminium alpha dans un rapport molaire de 1:1,05 à 1:1,80 et on les réduit sous la forme d'une poudre ayant une grosseur de grains inférieure/égale à 1 µm, on calcine ensuite à une température de 1250°C la poudre ainsi obtenue et la réduit dans un moulin en une poudre ayant une grosseur de grains inférieure/égale à 5 µm, de préférence d'environ 0,5 µm, on met la poudre ainsi obtenue en suspension dans de l'eau avec des agents dispersants, plastifiants et liants et la gache sous la forme d'une barbotine et la transforme ensuite par séchage par pulvérisation en un granulat fluide ayant une grosseur des grains comprise entre 0,1 et 250 um, et on comprime le granulat dans une presse isostatique sous la forme d'un tube enveloppe (1) avec une épaisseur de paroi comprise entre 2 mm et 4 mm sous une pression de compression d'environ 200 MPa et le frite à une température supérieure à 1700°C.
